# EUROPÄISCHE PATENTSCHRIFT

(11) **EP 4 080 922 B1**
(45) Veröffentlichungstag und Bekanntmachung des Hinweises auf die Patenterteilung: **27.11.2024**
(21) Anmeldenummer: 21170174.3
(22) Anmeldetag: 23.04.2021
(51) Int. Cl.: H04W 4/90, A01G 23/00, G06Q 10/06, H04L 67/12, A01G 7/00, G06Q 10/0631, G06Q 50/02

(54) **VERFAHREN ZUM BETREIBEN EINES FORST-KOMMUNIKATIONS-SYSTEMS UND FORST-KOMMUNIKATIONS-SYSTEM**
FOREST COMMUNICATION SYSTEM AND METHOD OF OPERATING A FOREST COMMUNICATION SYSTEM
PROCÉDÉ DE FONCTIONNEMENT D'UN SYSTÈME DE COMMUNICATION FORESTIER ET D'UN SYSTÈME DE COMMUNICATION FORESTIER

(43) Veröffentlichungstag der Anmeldung: 26.10.2022
(73) Patentinhaber: Andreas Stihl AG & Co. KG, 71336 Waiblingen (DE)
(72) Erfinder: Conrad, Nils, 71404 Korb (DE); Danner, Julian, 71577 Grosserlach (DE); Mang, Harald, 71364 Winnenden (DE)
(74) Vertreter: Patentanwälte Ruff, Wilhelm, Beier, Dauster & Partner mbB

(56) Entgegenhaltungen:
- EP-A1- 2 741 264
- CN-A- 109 246 209
- JP-A- 2014 153 876
- US-A1- 2017 303 068
- SATHIASEELAN ARJUNA ET AL: "Optimizing Mobile Application Communication for Challenged Network Environments", PROCEEDINGS OF THE 2015 ANNUAL SYMPOSIUM ON COMPUTING FOR DEVELOPMENT, DEV '15, 1 December 2015 (2015-12-01), New York, New York, USA, pages 167 - 175, XP093129498, ISBN: 978-1-4503-3490-7, Retrieved from the Internet <URL:https://dx.doi.org/10.1145/2830629.2830644> [retrieved on 20240209]

## Beschreibung

### ANWENDUNGSGEBIET UND STAND DER TECHNIK

Die Erfindung bezieht sich auf ein Verfahren zum Betreiben eines Forst-Kommunikations-Systems und ein Forst-Kommunikations-System.

Die EP 2 741 264 A1 offenbart ein Verfahren und eine Vorrichtung zum Verwalten eines Standorts. Bodensensoreinheiten werden an dem Ort in einem Wald von einer Gruppe von Luftfahrzeugen eingesetzt. Informationen werden über eine Anzahl von Bodenbedingungen an dem Ort in dem Wald unter Verwendung der Bodensensoreinheiten an dem Ort erzeugt. Die Informationen werden von den Bodensensoreinheiten zur Analyse an einen entfernten Ort übertragen.

Die CN 109 246 209 A offenbart ein IOT (Internet of Things)-Sicherheitskommunikationsmanagementverfahren für die Forstwirtschaft. Das Verfahren umfasst die Schritte, dass ein Edge-Computing-Gerät die Analyse der von einem IOT-Gerät gesammelten Daten durchführt, wobei das Edge-Computing-Gerät ein Kommunikationsmodul, ein Authentifizierungsmodul, einen Controller und eine Strategieausführungseinheit umfasst; das Authentifizierungsmodul verteilt Dimensionsetiketten in einem kategoriebezogenen Modus über eine Etiketteneinheit an das IOT-Gerät, so dass jedes Dimensionsetikett einem Typ von lOT-Geräten entspricht, wobei die Dimensionsetiketten öffentliche Schlüsselzertifikate aufweisen, und die Dimensionsetiketten den IOT-Geräten zugeordnet sind und die Kategorie der forstwirtschaftlichen lOT-Dienste; ein Controller speichert und weist eine Sicherheitsregel zu, und das Authentifizierungsmodul empfängt einen Authentifizierungsschlüssel von einem TLS-Endpunkt des IOT-Geräts und bestimmt, ob das Dimensionslabel dem IOT-Gerät der Kategorie zugeordnet ist oder nicht; die Strategieausführungseinheit verwaltet die Kommunikation des IOT-Geräts gemäß der Sicherheitsregel. Das Verfahren kann eine Kommunikationsverwaltung des IOT-Geräts basierend auf der Sicherheitsregel durchführen, wodurch die Sicherheit eines Systems verbessert wird.

Die US 2017/0303068 A1 offenbart, dass Informationen von einem geografisch verteilten Sensornetzwerk mithilfe eines skalierbaren drahtlosen Geocast-Protokolls erfasst werden. Geografisch verteilte Netzwerke unbeaufsichtigter Sensoren werden an gewünschten Orten platziert, um verschiedene Arten von Informationen zu sammeln, wie zum Beispiel Umweltparameter, Temperatur, Luftfeuchtigkeit, Niederschlag, Wärmesignaturen, Video, Audio, seismische Aktivität und/oder Windbedingungen. Um Informationen zu erfassen, wird mithilfe des Geocast-Protokolls das geografische Gebiet angefragt, in dem sich die Sensoren befinden. Die Übermittlung der Anfrage basiert auf dem physischen Ort einer Region, in der sich ein Sensornetzwerk befindet, der Art der angefragten Informationen und/oder zeitlichen Bedingungen. Jeder Sensor, der eine Anfrage empfängt, ermittelt, ob alle Anforderungen/Bedingungen erfüllt sind. Ist dies der Fall, wird die Anfrage vom Empfängersensor angenommen, verarbeitet und entsprechend beantwortet. Antworten auf Anfragen werden über das Geocast-Protokoll bereitgestellt.

Ein Dokument von Brunette et al. offenbart "Optimizing Mobile Application Communication for Challenged Network Environments".

### AUFGABE UND LÖSUNG

Der Erfindung liegt als Aufgabe die Bereitstellung eines Verfahrens zum Betreiben eines Forst-Kommunikations-Systems und eines Forst-Kommunikations-Systems zugrunde, das jeweils verbesserte Eigenschaften aufweist, insbesondere ein effizientes und/oder gefahrenreduziertes Arbeiten im Forst ermöglicht.

Die Erfindung löst die Aufgabe durch die Bereitstellung eines Verfahrens mit den Merkmalen des Anspruchs 1 und eines Forst-Kommunikations-Systems mit den Merkmalen des Anspruchs 11. Vorteilhafte Weiterbildungen und/oder Ausgestaltungen der Erfindung sind in den abhängigen Ansprüchen beschrieben.

Das erfindungsgemäße, insbesondere automatische, Verfahren ist zum, insbesondere automatischen, Betreiben eines, insbesondere elektrischen, Forst-Kommunikations-Systems ausgebildet bzw. konfiguriert bzw. vorgesehen. Das Forst-Kommunikations-System umfasst bzw. weist mehrere mobile, insbesondere elektrische, Kommunikations-Geräte auf. Die Kommunikations-Geräte umfassen bzw. weisen jeweils eine, insbesondere elektrische, Ausgabe- und Eingabe-Einrichtung auf. Die Ausgabe- und Eingabe-Einrichtung ist zur, insbesondere automatischen, Ausgabe und zur, insbesondere automatischen, Eingabe von Arbeitsprozess-Daten, insbesondere Werten und/oder Inhalten der Arbeitsprozess-Daten, über Arbeitsschritte zu bearbeitender und/oder bearbeiteter Baumabschnitte, insbesondere Bäume, betreffend, insbesondere mindestens, ein Mitglied bzw. einen Teilnehmer in einer Arbeitsgruppe ausgebildet bzw. konfiguriert. Das Verfahren umfasst bzw. weist den Schritt auf: automatisches Abgleichen, insbesondere mehrseitiges bzw. bidirektionales Abgleichen und/oder Angleichen und/oder Synchronisieren, der Arbeitsprozess-Daten zwischen den Kommunikations-Geräten in einem Peer-to-Peer-Netzwerk, insbesondere mindestens, mittels kabellosen bzw. drahtlosen Übertragens, insbesondere automatischen Übertragens, basierend auf einer, insbesondere maximal, mittelreichweitigen, insbesondere digitalen, Übertragungs-Technologie, insbesondere Funk-Übertragungs-Technologie.

Dies ermöglicht, insbesondere das Peer-to-Peer-Netzwerk und die mittelreichweitige Übertragungs-Technologie ermöglichen, eine Zuverlässigkeit des Übertragens und somit des Abgleichens der Arbeitsprozess-Daten zwischen den Kommunikations-Geräten, insbesondere im Forst bzw. Wald und/oder offline, also ohne Mobilfunk-Verbindung bzw. -Empfang. Zusätzlich oder alternativ ermöglicht dies, insbesondere das Abgleichen der Arbeitsprozess-Daten zwischen den Kommunikations-Geräten, eine, insbesondere dynamische bzw. aktualisierte, Koordinierung bzw. Abstimmung der Arbeitsschritte und/oder, insbesondere somit, ein effizientes und/oder gefahrenreduziertes Arbeiten der Arbeitsgruppe, insbesondere im Forst.

Insbesondere kann bei einem nicht-erfindungsgemäßen Verfahren ein Übertragen von Arbeitsprozess-Daten im Forst schwer, insbesondere unzuverlässig, sein. Denn im Forst kann keine Infrastruktur zu dem Übertragen vorhanden sein, insbesondere im Unterschied zur Stadt.

Das Peer-to-Peer-Netzwerk kann eigen- bzw. selbstständig sein.

Das Abgleichen der Arbeitsprozess-Daten zwischen den Kommunikations-Geräten braucht oder kann nicht in einem Client-Server-Netzwerk und/oder nicht mittels kabellosen Übertragens basierend auf einer langreichweitigen Übertragungs-Technologie sein und/oder ausgeführt werden.

Das Peer-to-Peer-Netzwerk kann durch die Kommunikations-Geräte und/oder die Arbeitsgruppe definiert sein.

Die Arbeitsgruppe kann durch die Arbeitsschritte und/oder die Baumabschnitte und/oder ihre Mitglieder definiert sein.

Die Arbeitsschritte können miteinander zusammenhängende bzw. voneinander abhängige bzw. aufeinander abzustimmende bzw., insbesondere zeitlich, aufeinanderfolgende Arbeitsschritte sein. Zusätzlich oder alternativ können die Arbeitsschritte durch die Arbeitsgruppe auszuführen sein bzw. ausgeführt werden und/oder worden sein bzw. die Baumabschnitte können durch die Arbeitsgruppe zu bearbeiten sein bzw. bearbeitet werden und/oder worden sein.

Das Mitglied kann ein Benutzer bzw. eine natürliche Person bzw. ein Mensch, insbesondere ein Forstarbeiter, oder eine Maschine sein.

Die Ausgabe- und Eingabe-Einrichtung kann eine Benutzer-Ausgabe- und Eingabe-Einrichtung sein. Zusätzlich oder alternativ kann die Ausgabe- und Eingabe-Einrichtung zur Ausgabe der Arbeitsprozess-Daten, insbesondere über mindestens einen Arbeitsschritt mindestens eines zu bearbeitenden Baumabschnitts, an das Mitglied und/oder zur Eingabe der Arbeitsprozess-Daten, insbesondere über mindestens einen Arbeitsschritt mindestens eines bearbeiteten Baumabschnitts, durch das Mitglied ausgebildet sein. Weiter zusätzlich oder alternativ kann die Ausgabe- und Eingabe-Einrichtung eine Anzeige, eine Vibrationseinrichtung und/oder einen Schallerzeuger, insbesondere einen Lautsprecher, zur Ausgabe der Arbeitsprozess-Daten und/oder zur optischen, haptischen und/oder akustischen Ausgabe der Arbeitsprozess-Daten aufweisen. Weiter zusätzlich oder alternativ kann die Ausgabe- und Eingabe-Einrichtung eine Tastatur, insbesondere ein Touch-Display, und/oder eine Sprach-Eingabe-Einrichtung, insbesondere ein Mikrophon, zur Eingabe der Arbeitsprozess-Daten und/oder zur berührungsbehafteten bzw. berührungssensitiven bzw. haptischen und/oder akustischen Eingabe der Arbeitsprozess-Daten aufweisen.

Das Verfahren kann den Schritt aufweisen: Ausgeben, insbesondere optisches, haptisches und/oder akustisches Ausgeben, der, insbesondere nicht-abgeglichenen oder abgeglichenen, Arbeitsprozess-Daten, insbesondere mittels der Ausgabe- und Eingabe-Einrichtung. Zusätzlich oder alternativ kann das Verfahren den Schritt aufweisen: Eingeben, insbesondere Erfassen einer Eingabe, der Arbeitsprozess-Daten, insbesondere mittels der Ausgabe- und Eingabe-Einrichtung.

Das Abgleichen der Arbeitsprozess-Daten kann auf den Kommunikations-Geräten sein und/oder ausgeführt werden.

Das Verfahren kann, insbesondere mehrfach, wiederholt, insbesondere für jeden Arbeitsschritt, werden.

Das Kommunikations-Gerät kann ein Endgerät und/oder ein Smartphone aufweisen, insbesondere sein. Zusätzlich oder alternativ kann das Kommunikations-Gerät, insbesondere bereits, vorhanden sein. Weiter zusätzlich oder alternativ kann das Kommunikations-Gerät mindestens eine Übertragungseinrichtung zum, insbesondere zu dem, Übertragen, insbesondere der Arbeitsprozess-Daten, aufweisen.

Die Arbeitsprozess-Daten können, insbesondere zu Anfang und/oder mindestens teilweise, vorgegeben sein, insbesondere durch ein Forstwirtschaftssystem.

Die Baumabschnitte können im Forst sein. Zusätzlich oder alternativ können die Baumabschnitte einen Baumstamm und/oder einen Stammabschnitt aufweisen, insbesondere sein. Weiter zusätzlich oder alternativ können die Baumabschnitte, insbesondere jeweils, stehend, insbesondere lebend, gefällt und/oder liegend sein.

Ausgelöst durch jede, insbesondere neue, Eingabe von neuen Arbeitsprozess-Daten, insbesondere mittels einer der Ausgabe- und Eingabe-Einrichtungen, wird jeweils das Abgleichen neu bzw. erneut, insbesondere unverzüglich bzw. in Echtzeit und/oder automatisch, ausgeführt. Dies ermöglicht eine Aktualität bzw. eine Konsistenz der Arbeitsprozess-Daten. Insbesondere kann die Eingabe, insbesondere durch das Mitglied, in Folge einer Ausführung mindestens eines Arbeitsschritts bzw. mindestens einer Bearbeitung mindestens eines Baumabschnitts, insbesondere durch das Mitglied, sein und/oder ausgeführt werden.

Die Eingabe weist eine Bestätigung der ausgegebenen Arbeitsprozess-Daten und/oder von den ausgegebenen Arbeitsprozess-Daten abweichende Arbeitsprozess-Daten auf. Insbesondere kann die Eingabe die Bestätigung der ausgegebenen Arbeitsprozess-Daten und/oder die von den ausgegebenen Arbeitsprozess-Daten abweichende Arbeitsprozess-Daten sein.

Das Abgleichen umfasst bzw. weist auf: automatisches Vergleichen von Arbeitsprozess-Daten eingegeben mittels einer der Ausgabe- und Eingabe-Einrichtungen mit vorgegebenen Arbeitsprozess-Daten ausgegeben mittels der Ausgabe- und Eingabe-Einrichtung. Bei einer Mindestabweichung der vorgegebenen Arbeitsprozess-Daten und der eingegebenen Arbeitsprozess-Daten voneinander automatisches Anpassen, insbesondere Ändern und/oder Modifizieren, der vorgegebenen Arbeitsprozess-Daten über Arbeitsschritte zu bearbeitender Baumabschnitte basierend auf der Mindestabweichung und/oder den eingegebenen Arbeitsprozess-Daten anhand, insbesondere mindestens, eines Optimierungs- bzw. Anpassungskriteriums. Dies ermöglicht eine Reorganisation der, insbesondere auszuführenden, Arbeitsschritte bei der Mindestabweichung, insbesondere falls die Arbeitsprozess-Daten bzw. mindestens ein Arbeitsschritt bzw. mindestens eine Bearbeitung mindestens eines Baumabschnitts nicht wie vorgegeben ausgeführt bzw. bearbeitet werden kann und/oder konnte. Zusätzlich oder alternativ ermöglicht die Mindestabweichung das Anpassen bei einer relevanten Abweichung, insbesondere außerhalb einer Toleranz, und/oder das Anpassen bei einer nicht relevanten Abweichung, insbesondere innerhalb einer Toleranz, zu vermeiden. Insbesondere braucht oder kann bei keiner Mindestabweichung kein Anpassen ausgeführt werden. Zusätzlich oder alternativ kann das Optimierungskriterium vorgegeben sein.

Das Optimierungskriterium ist ein Gefahrenreduzierungsoptimierungskriterium, ein, insbesondere räumliches, Abstandsoptimierungskriterium und/oder ein, insbesondere schnellstes, Gesamt- bzw. Gruppenarbeitsfortschrittoptimierungskriterium, ein Zeitoptimierungskriterium und/oder ein Wertoptimierungskriterium. Ein derartiges Optimierungskriterium ermöglicht eine Berücksichtigung von Zusammenhängen der Arbeitsschritte miteinander bzw. Abhängigkeiten der Arbeitsschritte voneinander bzw. einer, insbesondere zeitlichen, Aufeinanderfolge der Arbeitsschritte. Insbesondere ermöglicht das Gefahrenreduzierungsoptimierungskriterium eine Reduzierung von möglichen Gefahren. Zusätzlich oder alternativ ermöglicht das Abstandsoptimierungskriterium eine Vermeidung eines zu nahen und somit sich möglicherweise gegenseitig negativ beeinträchtigenden bzw. blockierenden Arbeitens und/oder eines zu entfernten und somit sich nicht gegenseitig helfen könnenden Arbeitens der Mitglieder der Arbeitsgruppe. Insbesondere können/kann das Gefahrenreduzierungsoptimierungskriterium und/oder das Abstandsoptimierungskriterium für einen, insbesondere räumlichen, Minimalabstand und/oder einen, insbesondere räumlichen, Maximalabstand zwischen Orten mindestens eines Teils, insbesondere aller, der Arbeitsschritte und/oder mindestens eines Teils, insbesondere aller, der Baumabschnitte charakteristisch sein. Weiter zusätzlich oder alternativ ermöglichen/ermöglicht das Gruppenarbeitsfortschrittoptimierungskriterium und/oder das Zeitoptimierungskriterium eine Vermeidung und/oder eine Lösung bzw. eine Hilfe bei einer Blockade eines Arbeitens eines Mitglieds der Arbeitsgruppe durch ein weiteres Mitglied der Arbeitsgruppe, insbesondere falls die Arbeitsprozess-Daten bzw. mindestens ein Arbeitsschritt bzw. mindestens eine Bearbeitung mindestens eines Baumabschnitts durch das Mitglied nicht wie vorgegeben ausgeführt bzw. bearbeitet werden kann und/oder konnte. Weiter zusätzlich oder alternativ ermöglicht das Wertoptimierungskriterium eine Steigerung eines Werts der, insbesondere dann, bearbeiteten Baumabschnitte. Insbesondere kann das Wertoptimierungskriterium für verschiedene Baumabschnittswerte, insbesondere Baumabschnittspreise, pro Baumart, pro Baumabschnittslänge, pro Baumabschnittsdurchmesser, pro Baumabschnittsmenge und/oder pro Baumabschnittsqualität charakteristisch sein.

Das Verfahren umfasst bzw. weist den Schritt auf: bei der Mindestabweichung und bei dem Anpassen anhand des Gefahrenreduzierungsoptimierungskriteriums Ausgeben, insbesondere automatisches Ausgeben, einer Information, insbesondere eines Werts und/oder eines Inhalts der Information, über die Mindestabweichung und/oder das Anpassen und/oder die angepassten Arbeitsprozess-Daten und/oder das Optimierungskriterium mittels mindestens einer der Ausgabe- und Eingabe-Einrichtungen. Dies ermöglicht eine Wahrnehmung des, insbesondere gefahrenreduzierungsoptimierungsbedingten, Anpassens. Insbesondere kann die Information benutzerwahrnehmbar sein.

In einer Weiterbildung der Erfindung sind die Arbeitsprozess-Daten über mindestens einen Pflanzschritt, mindestens einen Jungbestandspflegeschritt, mindestens einen Rückschnittschritt, mindestens einen Wertastungsschritt, mindestens einen Fällschritt, mindestens einen Entastungsschritt, mindestens einen Ablängschritt, mindestens einen Rückeschritt, mindestens einen Hängerbeseitigungsschritt, mindestens eine, insbesondere zeitliche, Reihenfolge und/oder mindestens einen, insbesondere jeweiligen, Ort mindestens eines Teils, insbesondere aller, der Arbeitsschritte und/oder mindestens eines Teils, insbesondere aller, der Baumabschnitte, mindestens eine Baumart, mindestens eine Baumabschnittslänge, mindestens einen Baumabschnittsdurchmesser, mindestens eine Baumabschnittsmenge, mindestens eine Baumabschnittsqualität und/oder mindestens einen Baumabschnittswert. Ein Abgleichen derartiger Arbeitsprozess-Daten, insbesondere derartiger Arbeitsschritte und/oder derartiger Eigenschaften, ermöglicht ein besonders vorteilhaftes Arbeiten der Arbeitsgruppe. Insbesondere können die Eigenschaften, insbesondere mindestens teilweise, gemessen sein, insbesondere durch das Mitglied und/oder die Arbeitsgruppe. Zusätzlich oder alternativ kann der Ort, insbesondere automatisch, bestimmt, insbesondere erfasst, sein und/oder werden, insbesondere mittels des Kommunikations-Geräts und/oder einer Ortbestimmungseinrichtung, insbesondere des Kommunikations-Geräts, insbesondere in Folge der Eingabe. Insbesondere kann die Ortbestimmungseinrichtung einen Satelliten-Positionsbestimmungsempfänger aufweisen, insbesondere sein.

In einer Ausgestaltung der Erfindung umfasst bzw. weist das Verfahren den Schritt auf: Freigeben, insbesondere automatisches Freigeben, der angepassten Arbeitsprozess-Daten zum manuellen Anpassen, insbesondere mittels mindestens einer der Ausgabe- und Eingabe-Einrichtungen. Insbesondere kann das manuelle Anpassen durch mindestens einen der Benutzer sein und/oder ausgeführt werden.

In einer Weiterbildung der Erfindung umfasst bzw. weist das Verfahren den Schritt auf: Übertragen, insbesondere automatisches Übertragen, von den, insbesondere vorgegebenen, Arbeitsprozess-Daten von einer externen, insbesondere elektrischen, Datenbank zu einem, insbesondere elektrischen, Gateway, insbesondere einem Smartphone, in dem Peer-to-Peer-Netzwerk, insbesondere kabellos basierend auf einer langreichweitigen, insbesondere digitalen, Übertragungs-Technologie, insbesondere Funk-Übertragungs-Technologie. Dies ermöglicht das Gelangen von den Arbeitsprozess-Daten in das Peer-to-Peer-Netzwerk hinein bzw. zu den Kommunikations-Geräten. Insbesondere ermöglicht das Übertragen kabellos basierend auf der langreichweitigen Übertragungs-Technologie das Übertragen von den Arbeitsprozess-Daten in den Forst hinein. Insbesondere kann die Datenbank eine Datenbank eines Forstwirtschaftssystems sein. Zusätzlich oder alternativ kann die Datenbank dezentral und/oder mittels eines verteilten Systems bereitgestellt sein, insbesondere in Form einer Cloud. Weiter zusätzlich oder alternativ braucht oder kann das Abgleichen der Arbeitsprozess-Daten zwischen den Kommunikations-Geräten nicht mittels kabellosen Übertragens basierend auf der langreichweitigen Übertragungs-Technologie sein und/oder ausgeführt werden. Denn nicht jedes Kommunikations-Gerät kann im Forst online, also mit Mobilfunk-Verbindung bzw. - Empfang, sein. Zusätzlich oder alternativ kann die langreichweitige Übertragungs-Technologie von der mittelreichweitigen Übertragungs-Technologie verschieden sein, insbesondere eine höhere Reichweite und/oder, insbesondere somit, einen höheren Energiebedarf aufweisen. Weiter zusätzlich oder alternativ kann mindestens eines der Kommunikations-Geräte das Gateway sein und/oder darstellen. Weiter zusätzlich oder alternativ kann das Gateway mobil sein.

In einer Weiterbildung der Erfindung umfasst bzw. weist das Forst-Kommunikations-System mindestens eine mobile, insbesondere elektrische, Kommunikations-Zwischenstation auf. Zusätzlich oder alternativ wird das Abgleichen zwischen mindestens einem der Kommunikations-Geräte und einer, insbesondere der und/oder zugeordneten, Kommunikations-Zwischenstation in dem Peer-to-Peer-Netzwerk mittels kabellosen Übertragens, insbesondere automatischen Übertragens, basierend auf einer kurzreichweitigen, insbesondere digitalen, Übertragungs-Technologie, insbesondere Funk-Übertragungs-Technologie, und von der Kommunikations-Zwischenstation mittels des kabellosen Übertragens basierend auf der mittelreichweitigen Übertragungs-Technologie ausgeführt, insbesondere zu mindestens einer weiteren Kommunikations-Zwischenstation. Dies, insbesondere das kabellose Übertragen basierend auf der kurzreichweitigen Übertragungs-Technologie zwischen dem Kommunikations-Gerät und der Kommunikations-Zwischenstation, ermöglicht das Abgleichen zwischen den Kommunikations-Geräten mittels kabellosen Übertragens basierend auf der mittelreichweitigen Übertragungs-Technologie und/oder einen Synergieeffekt. Insbesondere braucht oder kann das Kommunikations-Gerät, insbesondere selbst, nicht zum kabellosen Übertragen basierend auf der mittelreichweitigen Übertragungs-Technologie ausgebildet sein, oder die Kommunikations-Zwischenstation kann gegenüber dem Kommunikations-Gerät für das kabellose Übertragen basierend auf der mittelreichweitigen Übertragungs-Technologie besser, insbesondere optimiert, sein. Zusätzlich oder alternativ kann die Kommunikations-Zwischenstation, insbesondere bereits, vorhanden sein, insbesondere für eine Sprach-Nachricht von einem der Mitglieder und/oder zwischen den Kommunikations-Zwischenstationen. Weiter zusätzlich oder alternativ kann die Kommunikations-Zwischenstation eine, insbesondere elektrische, Ausgabe- und/oder Eingabe-Einrichtung, insbesondere Benutzer-Ausgabe- und/oder Eingabe-Einrichtung, aufweisen. Insbesondere kann die Ausgabe- und Eingabe-Einrichtung wie vorhergehend genannt ausgebildet sein. In anderen Worten: Die Ausgabe- und/oder Eingabe-Einrichtung kann zur, insbesondere optischen, haptischen und/oder akustischen, Ausgabe, insbesondere Benutzer-Ausgabe, und/oder zur, haptischen und/oder akustischen, Eingabe, insbesondere Benutzer-Eingabe, insbesondere von den Arbeitsprozess-Daten, ausgebildet sein. Weiter zusätzlich oder alternativ kann die Kommunikations-Zwischenstation mindestens eine Übertragungseinrichtung zum, insbesondere zu dem, Übertragen, insbesondere der Arbeitsprozess-Daten, aufweisen. Weiter zusätzlich oder alternativ kann die kurzreichweitige Übertragungs-Technologie von der mittelreichweitigen Übertragungs-Technologie verschieden sein, insbesondere eine niedrigere Reichweite und/oder, insbesondere somit, einen niedrigeren Energiebedarf aufweisen. Weiter zusätzlich oder alternativ kann der Ort bestimmt sein und/oder werden mittels der Kommunikations-Zwischenstation, insbesondere der Ortbestimmungseinrichtung der Kommunikations-Zwischenstation.

Insbesondere können/kann das Kommunikations-Gerät und/oder die Kommunikations-Zwischenstation, insbesondere jeweils, in einem Fahrzeug, insbesondere einem Automobil, insbesondere fest, eingebaut sein.

In einer Weiterbildung, insbesondere einer Ausgestaltung, der Erfindung ist mindestens eines der Kommunikations-Geräte ein körpergetragenes, insbesondere kopfgetragenes, und/oder handgetragenes Kommunikations-Gerät. Zusätzlich oder alternativ ist mindestens die Kommunikations-Zwischenstation, soweit vorhanden, eine körpergetragene, insbesondere kopfgetragene, und/oder handgetragene Kommunikations-Zwischenstation. Insbesondere sind/ist das Kommunikations-Gerät und/oder die Kommunikations-Zwischenstation, insbesondere jeweils, an einer Forstarbeiter-Schutzausrüstung, insbesondere einem Schutzhelm und/oder einem Gesichts- und/oder Gehörschutz und/oder einer Schutzbrille und/oder einem Schutzhandschuh, mindestens angeordnet, insbesondere befestigt, insbesondere integriert. Dies ermöglicht ein einfaches Mitführen des Kommunikations-Geräts und/oder der Kommunikations-Zwischenstation. Insbesondere kann körpergetragen und/oder handgetragen bedeuten, dass das Kommunikations-Gerät und/oder die Kommunikations-Zwischenstation, insbesondere jeweils, eine maximale Masse von 10 kg (Kilogramm), insbesondere von 5 kg, insbesondere von 2 kg, insbesondere von 1 kg, insbesondere von 0,5 kg, insbesondere von 0,2 kg, insbesondere von 0,1 kg, insbesondere von 0,05 kg, aufweisen kann. Zusätzlich oder alternativ kann das Kommunikations-Gerät, insbesondere die Ausgabe- und Eingabe-Einrichtung, und/oder die Kommunikations-Zwischenstation einen Kopfhörer, insbesondere ein Headset, aufweisen, insbesondere sein. Weiter zusätzlich oder alternativ kann die Anzeige, soweit vorhanden, zu einem Anzeigen, insbesondere zu einem Projizieren bzw. Einblenden, in ein Sichtfeld des Benutzers und/oder auf ein Visier des Schutzhelms, des Gesichts- und/oder Gehörschutz und/oder der Schutzbrille, insbesondere vor dem Baumabschnitt, ausgebildet sein. Insbesondere kann die Anzeige auf Englisch als Head-up-Display und/oder Head-mounted-Display bezeichnet werden. Zusätzlich oder alternativ kann dies auf Englisch als Virtual Reality und/oder als Augmented Reality bezeichnet werden.

In einer Weiterbildung, insbesondere einer Ausgestaltung, der Erfindung umfasst bzw. weist das Verfahren den Schritt auf: eine, insbesondere die, Sprach-Nachricht, insbesondere einen Inhalt der Sprach-Nachricht, insbesondere von einem der Mitglieder und/oder zwischen den Kommunikations-Zwischenstationen, soweit vorhanden, insbesondere mindestens, kabellos Übertragen, insbesondere automatisch Übertragen, basierend auf der, insbesondere maximal, mittelreichweitigen Übertragungs-Technologie in dem Peer-to-Peer-Netzwerk. Dies ermöglicht einen Synergieeffekt. Insbesondere kann die Sprach-Nachricht mittels der Kommunikations-Zwischenstation erfasst sein und/oder werden.

In einer Weiterbildung der Erfindung umfasst bzw. weist das Verfahren den Schritt auf: Notfall-Daten und/oder -Nachrichten, insbesondere Werte und/oder Inhalte der Notfall-Daten und/oder -Nachrichten, insbesondere von einem der Mitglieder, kabellos Übertragen, insbesondere automatisch Übertragen, basierend auf der mittelreichweitigen Übertragungs-Technologie in dem Peer-to-Peer-Netzwerk und/oder basierend auf einer, insbesondere der und/oder digitalen, langreichweitigen Übertragungs-Technologie, insbesondere Funk-Übertragungs-Technologie.

Dies ermöglicht eine Erhöhung einer Wahrscheinlichkeit eines Empfangs der Notfall-Daten und/oder -Nachrichten und/oder, insbesondere somit eine Erhöhung einer Wahrscheinlichkeit im Notfall Hilfe zu bekommen. Insbesondere kann die langreichweitige Übertragungs-Technologie von der mittelreichweitigen Übertragungs-Technologie verschieden sein, insbesondere eine höhere Reichweite und/oder, insbesondere somit, einen höheren Energiebedarf aufweisen. Zusätzlich oder alternativ können die Notfall-Daten und/oder - Nachrichten mittels der Ausgabe- und Eingabe-Einrichtung eingegeben sein und/oder werden. Weiter zusätzlich oder alternativ können die Notfall-Daten und/oder -Nachrichten mit einer Notfalls-Ort-Information versehen sein.

In einer Weiterbildung, insbesondere einer Ausgestaltung, der Erfindung hat bzw. weist die mittelreichweitige Übertragungs-Technologie eine maximale Reichweite von 400 m (Meter) auf. Zusätzlich oder alternativ umfasst bzw. weist die mittelreichweitige Übertragungs-Technologie Bluetooth-Classic-Übertragungs-Technologie auf, insbesondere ist Bluetooth-Classic-Übertragungs-Technologie. Weiter zusätzlich oder alternativ nutzt die mittelreichweitige Übertragungs-Technologie eine 2,4 GHz (Gigahertz) Trägerfrequenz. Weiter zusätzlich oder alternativ hat bzw. weist die langreichweitige Übertragungs-Technologie, soweit vorhanden, eine minimale Reichweite von 1000 m auf. Weiter zusätzlich oder alternativ umfasst bzw. weist die langreichweitige Übertragungs-Technologie, soweit vorhanden, Narrow-Band-Internet-of-Things-Übertragungs-Technologie, Long-Term-Evolution-Übertragungs-Technologie, Long-Range-Übertragungs-Technologie und/oder Sigfox-Übertragungs-Technologie auf, insbesondere ist Narrow-Band-Internet-of-Things-Übertragungs-Technologie, Long-Term-Evolution-Übertragungs-Technologie, Long-Range-Übertragungs-Technologie und/oder Sigfox-Übertragungs-Technologie. Weiter zusätzlich oder alternativ hat bzw. weist die kurzreichweitige Übertragungs-Technologie, soweit vorhanden, eine maximale Reichweite von 10 m auf. Weiter zusätzlich oder alternativ umfasst bzw. weist die kurzreichweitige Übertragungs-Technologie Bluetooth-Low-Energy-Übertragungs-Technologie und/oder ZigBee-Übertragungs-Technologie auf, insbesondere ist Bluetooth-Low-Energy-Übertragungs-Technologie und/oder ZigBee-Übertragungs-Technologie. Insbesondere kann die langreichweitige Übertragungs-Technologie eine maximale Reichweite von 10000 m aufweisen.

Insbesondere können/kann die Kommunikations-Geräte und/oder die Kommunikations-Zwischenstation, insbesondere jeweils, zum Übertragen, insbesondere von den Notfall-Daten und/oder -Nachrichten, basierend auf der kurzreichweitigen Übertragungs-Technologie von und/oder zu mindestens einer, insbesondere weiteren, körpergetragenen und/oder handgetragenen Übertragungs-Vorrichtung ausgebildet sein. Insbesondere kann die Übertragungs-Vorrichtung eine, insbesondere elektrische, Ausgabe- und/oder Eingabe-Einrichtung, insbesondere Benutzer-Ausgabe- und/oder Eingabe-Einrichtung, aufweisen. Zusätzlich oder alternativ kann die Übertragungs-Vorrichtung an einem Arbeitsgerät bzw. Bearbeitungsgerät zur Bearbeitung der Baumabschnitte angeordnet sein, insbesondere in diesem integriert sein. Weiter zusätzlich oder alternativ kann die Übertragungs-Vorrichtung zur Generierung, insbesondere und zur Übertragung, von Daten ausgebildet sein, wobei die Daten dazu vorgesehen sein können, um im Arbeitsprozess, insbesondere bei der Ausführung der Arbeitsschritte, berücksichtigt zu werden.

In einer Weiterbildung der Erfindung umfassen bzw. weisen die Kommunikations-Geräte, insbesondere und die Kommunikations-Zwischenstation, jeweils ein, insbesondere elektrisches und/oder magnetisches und/oder optisches, Speichermedium auf. Das Speichermedium ist zum Speichern, insbesondere automatischen Speichern, der Arbeitsprozess-Daten ausgebildet bzw. konfiguriert. Dies ermöglicht das Abgleichen der Arbeitsprozess-Daten zwischen den Kommunikations-Geräten in dem Peer-to-Peer-Netzwerk. Insbesondere kann in Folge des Abgleichens jedes der Speichermedien die gleichen, insbesondere dieselben, Daten aufweisen bzw. enthalten bzw. die Daten können repliziert sein. Zusätzlich oder alternativ kann das Verfahren den Schritt aufweisen: Speichern, insbesondere automatisches Speichern, der, insbesondere abgeglichenen und/oder übertragenen, Arbeitsprozess-Daten, insbesondere mittels des Speichermediums.

Das erfindungsgemäße Forst-Kommunikations-System weist mehrere mobile, insbesondere die mehreren mobilen, Kommunikations-Geräte auf. Die Kommunikations-Geräte weisen jeweils eine, insbesondere die, Ausgabe- und Eingabe-Einrichtung auf. Die Ausgabe- und Eingabe-Einrichtung ist zur Ausgabe und zur Eingabe von, insbesondere den, Arbeitsprozess-Daten über, insbesondere die, Arbeitsschritte zu bearbeitender und/oder bearbeiteter, insbesondere der zu bearbeitenden und/oder bearbeiteten, Baumabschnitte betreffend ein, insbesondere das, Mitglied in einer, insbesondere der, Arbeitsgruppe ausgebildet. Das Forst-Kommunikations-System ist zum, insbesondere zu dem, automatischen Abgleichen der Arbeitsprozess-Daten zwischen den Kommunikations-Geräten in einem, insbesondere dem, Peer-to-Peer-Netzwerk mittels kabellosen Übertragens basierend auf einer, insbesondere der, mittelreichweitigen Übertragungs-Technologie ausgebildet. Ausgelöst durch jede, insbesondere neue, Eingabe von, insbesondere den, neuen Arbeitsprozess-Daten, insbesondere mittels einer der Ausgabe- und Eingabe-Einrichtungen, wird jeweils das Abgleichen neu ausgeführt. Die Eingabe weist eine, insbesondere die, Bestätigung der ausgegebenen Arbeitsprozess-Daten und/oder, insbesondere die, von den ausgegebenen Arbeitsprozess-Daten abweichende Arbeitsprozess-Daten auf. Das Abgleichen weist auf: automatisches Vergleichen von, insbesondere den, Arbeitsprozess-Daten eingegeben mittels einer der Ausgabe- und Eingabe-Einrichtungen mit, insbesondere den, vorgegebenen Arbeitsprozess-Daten ausgegeben mittels der Ausgabe- und Eingabe-Einrichtung. Bei einer, insbesondere der, Mindestabweichung der vorgegebenen Arbeitsprozess-Daten und der eingegebenen Arbeitsprozess-Daten voneinander automatisches Anpassen der vorgegebenen Arbeitsprozess-Daten über, insbesondere die, Arbeitsschritte zu bearbeitender, insbesondere der zu bearbeitenden, Baumabschnitte basierend auf der Mindestabweichung und/oder den eingegebenen Arbeitsprozess-Daten anhand eines, insbesondere des, Optimierungskriteriums. Das Optimierungskriterium ist ein, insbesondere das, Gefahrenreduzierungsoptimierungskriterium, ein, insbesondere das, Abstandsoptimierungskriterium und/oder ein, insbesondere das, Gruppenarbeitsfortschrittoptimierungskriterium, ein, insbesondere das, Zeitoptimierungskriterium und/oder ein, insbesondere das, Wertoptimierungskriterium. Das Forst-Kommunikations-System ist bei der Mindestabweichung und bei dem Anpassen anhand des Gefahrenreduzierungsoptimierungskriteriums zum, insbesondere zu dem, Ausgeben einer, insbesondere der, Information über die Mindestabweichung und/oder das Anpassen und/oder die angepassten Arbeitsprozess-Daten und/oder das Optimierungskriterium mittels mindestens einer der Ausgabe- und Eingabe-Einrichtungen ausgebildet.

Das Forst-Kommunikations-System kann mindestens einen Teil oder alle Vorteile ermöglichen wie für das Verfahren vorhergehend genannt.

Insbesondere kann das Forst-Kommunikations-System, insbesondere können die Kommunikations-Geräte und/oder die Kommunikations-Zwischenstation, insbesondere ein Prozessor des Forst-Kommunikations-Systems und/oder mindestens eines der Kommunikations-Geräte und/oder der Kommunikations-Zwischenstation, zum Ausführen des vorhergehend genannten Verfahrens ausgebildet bzw. konfiguriert sein. Zusätzlich oder alternativ kann das Forst-Kommunikations-System mindestens teilweise oder vollständig wie für das Verfahren vorhergehend genannt ausgebildet bzw. konfiguriert sein.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind. Dabei zeigen:
- Fig. 1: eine schematische Ansicht eines erfindungsgemäßen Forst-Kommunikations-Systems und eines erfindungsgemäßen Verfahrens zum Betreiben des Forst-Kommunikations-Systems, und
- Fig. 2: eine schematische Ansicht eines Kommunikations-Geräts und einer Kommunikations-Zwischenstation des Forst-Kommunikations-Systems der Fig. 1.

### DETAILLIERTE BESCHREIBUNG DER AUSFÜHRUNGSBEISPIELE

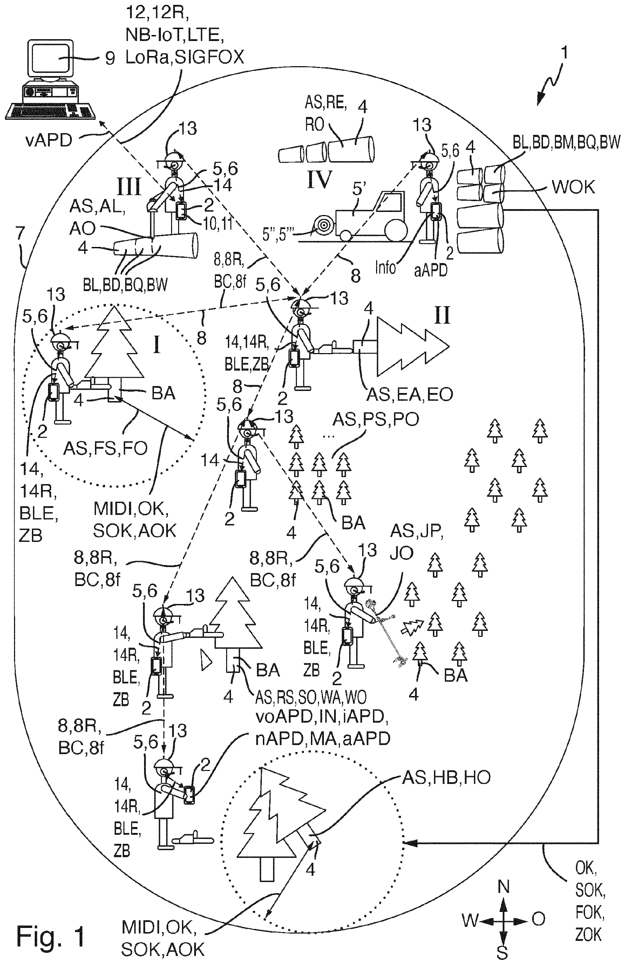

Fig. 1 zeigt ein erfindungsgemäßes Forst-Kommunikations-System 1 und ein erfindungsgemäßes Verfahren zum Betreiben des Forst-Kommunikations-Systems 1.

Das Forst-Kommunikations-System 1 weist mehrere mobile Kommunikations-Geräte 2 auf. In dem gezeigten Ausführungsbeispiel weist das Forst-Kommunikations-System 1 acht Kommunikations-Geräte 2 auf. In alternativen Ausführungsbeispielen kann das Forst-Kommunikations-System mindestens zwei, insbesondere mindestens fünf, insbesondere mindestens zehn, Kommunikations-Geräte aufweisen.

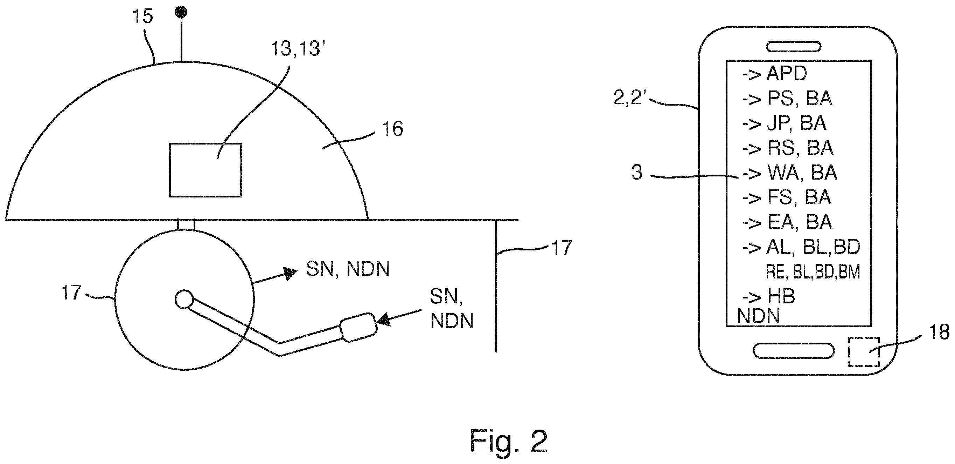

Die Kommunikations-Geräte 2 weisen jeweils eine Ausgabe- und Eingabe-Einrichtung 3 auf, wie in Fig. 2 gezeigt. Die Ausgabe- und Eingabe-Einrichtung 3 ist zur Ausgabe und zur Eingabe von Arbeitsprozess-Daten APD über Arbeitsschritte AS zu bearbeitender und/oder bearbeiteter Baumabschnitte 4 betreffend ein Mitglied 5 in einer Arbeitsgruppe 6 ausgebildet, insbesondere gibt aus und/oder ein.

Das Forst-Kommunikations-System 1 ist zum Abgleichen der Arbeitsprozess-Daten APD zwischen den Kommunikations-Geräten 2 in einem Peer-to-Peer-Netzwerk 7 mittels kabellosen Übertragens basierend auf einer mittelreichweitigen Übertragungs-Technologie 8 ausgebildet, insbesondere überträgt und gleicht ab.

Das Verfahren weist den Schritt auf: Abgleichen der Arbeitsprozess-Daten APD zwischen den Kommunikations-Geräten 2 in dem Peer-to-Peer-Netzwerk 7 mittels kabellosen Übertragens basierend auf der mittelreichweitigen Übertragungs-Technologie 8, insbesondere mittels des Forst-Kommunikations-Systems 1.

Im Detail sind die Arbeitsprozess-Daten APD über mindestens einen Pflanzschritt PS, mindestens einen Jungbestandspflegeschritt JP, mindestens einen Rückschnittschritt RS, mindestens einen Wertastungsschritt WA, mindestens einen Fällschritt FS, mindestens einen Entastungsschritt EA, mindestens einen Ablängschritt AL, mindestens einen Rückeschritt RE, mindestens einen Hängerbeseitigungsschritt HB, mindestens eine Reihenfolge I, II, III, IV und/oder mindestens einen Ort PO, JO, SO, WO, FO, EO, AO, RO, HO mindestens eines Teils der Arbeitsschritte AS und/oder mindestens eines Teils der Baumabschnitte 4.

Insbesondere ist die Reihenfolge I, II, III, IV der Arbeitsschritte AS der Fällschritt FS, dann der Entastungsschritt EA, dann der Ablängschritt AL und dann der Rückeschritt RE. Falls beim Fällschritt FS der Baumabschnitt 4 hängen bleibt, kommt dann der Hängerbeseitigungsschritt HB dazu, und insbesondere dann der Entastungsschritt EA.

Zusätzlich oder alternativ können oder dürfen oder sollten beim bzw. während des Fällschritts FS und/oder des Hängerbeseitigungsschritts HB weitere Arbeitsschritte AS nicht zu nah bzw. nicht unter einem Minimalabstand MIDI, insbesondere eines Abstandsoptimierungskriteriums AOK, ausgeführt werden, insbesondere aufgrund eines Gefahrenpotentials ausgehend von dem zu fällenden und/oder umzuziehenden Baumabschnitt 4.

Weiter zusätzlich oder alternativ wird der Hängerbeseitigungsschritt HB durch ein Rückefahrzeug 5' mit Seilwinde 5" mit Seil 5‴ ausgeführt.

Insbesondere dazu wird der Rückeschritt RE unterbrochen und/oder aufgeschoben.

Des Weiteren sind die Arbeitsprozess-Daten APD über mindestens eine Baumart BA, mindestens eine Baumabschnittslänge BL, mindestens einen Baumabschnittsdurchmesser BD, mindestens eine Baumabschnittsmenge BM, mindestens eine Baumabschnittsqualität BQ und/oder mindestens einen Baumabschnittswert BW.

Außerdem wird ausgelöst durch jede, insbesondere neue, Eingabe IN von, insbesondere neuen, Arbeitsprozess-Daten nAPD, insbesondere mittels einer der Ausgabe- und Eingabe-Einrichtungen 3, jeweils das Abgleichen, insbesondere neu, ausgeführt.

Weiter weist das Abgleichen auf: Vergleichen von Arbeitsprozess-Daten iAPD eingegeben, insbesondere mittels einer der Ausgabe- und Eingabe-Einrichtungen 3, mit vorgegebenen Arbeitsprozess-Daten voAPD ausgegeben, insbesondere mittels der Ausgabe- und Eingabe-Einrichtung 3. Bei einer Mindestabweichung MA Anpassen der vorgegebenen Arbeitsprozess-Daten voAPD über Arbeitsschritte AS zu bearbeitender Baumabschnitte 4 basierend auf der Mindestabweichung MA und/oder den eingegebenen Arbeitsprozess-Daten iAPD, insbesondere anhand eines Optimierungskriteriums OK.

Im Detail ist das Optimierungskriterium OK ein Gefahrenreduzierungsoptimierungskriterium SOK, ein Abstandsoptimierungskriterium AOK und/oder ein Gruppenarbeitsfortschrittoptimierungskriterium FOK, ein Zeitoptimierungskriterium ZOK und/oder ein Wertoptimierungskriterium WOK.

Zudem weist das Verfahren den Schritt auf: bei der Mindestabweichung MA, insbesondere und bei dem Anpassen anhand des Gefahrenreduzierungsoptimierungskriteriums SOK, Ausgeben einer Information Info über die Mindestabweichung MA und/oder das Anpassen und/oder die angepassten Arbeitsprozess-Daten aAPD und/oder das Optimierungskriterium OK, insbesondere mittels mindestens einer der Ausgabe- und Eingabe-Einrichtungen 3.

Des Weiteren weist das Verfahren den Schritt auf: Freigeben der angepassten Arbeitsprozess-Daten aAPD zum manuellen Anpassen, insbesondere mittels mindestens einer der Ausgabe- und Eingabe-Einrichtungen 3.

Beispielsweise gibt mindestens eine der Ausgabe- und Eingabe-Einrichtungen 3 die, insbesondere vorgegebenen, Arbeitsprozess-Daten vAPD über den Ablängschritt AL des abzulängenden Baumabschnitts 4 an mindestens eines der Mitglieder 5 der Arbeitsgruppe 6 aus. In Folge der Ausgabe führt das Mitglied 5 den Ablängschritt AL aus bzw. längt den Baumabschnitt 4 ab, insbesondere erfolgreich. In Folge der Ausführung des Ablängschritts AL bzw. der Ablängung des abgelängten Baumabschnitts 4 gibt das Mitglied 5 die Arbeitsprozess-Daten APD über den Ablängschritt AL des abgelängten Baumabschnitts 4 mittels der Ausgabe- und Eingabe-Einrichtung 3 ein bzw. bestätigt die ausgegebenen Arbeitsprozess-Daten voAPD. Ausgelöst durch die Eingabe IN von den Arbeitsprozess-Daten nAPD wird das Abgleichen ausgeführt. Das Abgleichen weist auf: Vergleichen von den Arbeitsprozess-Daten iAPD eingegeben mit den vorgegebenen Arbeitsprozess-Daten voAPD ausgegeben. Dabei gibt es keine Mindestabweichung. In Folge des Abgleichens gibt mindestens eine, insbesondere andere, der Ausgabe- und Eingabe-Einrichtungen 3 die, insbesondere vorgegebenen, Arbeitsprozess-Daten vAPD über den Rückeschritt RE des, insbesondere abgelängten und, zu rückenden Baumabschnitts 4 an mindestens eines, insbesondere ein anderes, der Mitglieder 5 der Arbeitsgruppe 6 aus bzw. den Rückeschritt RE, insbesondere die Ausführung des Rückeschritts RE, frei.

Zusätzlich gibt mindestens eine, insbesondere nochmals andere, der Ausgabe- und Eingabe-Einrichtungen 3 die, insbesondere vorgegebenen, Arbeitsprozess-Daten vAPD über den Fällschritt FS des zu fällenden Baumabschnitts 4 an mindestens eines, insbesondere ein nochmals anderes, der Mitglieder 5 der Arbeitsgruppe 6 aus. In Folge der Ausgabe führt das Mitglied 5 den Fällschritt FS aus bzw. fällt den Baumabschnitt 4, insbesondere nicht erfolgreich bzw. der Baumabschnitt 4 bleibt hängen. In Folge der Ausführung des Fällschritts FS bzw. der Fällung des gefällten Baumabschnitts 4 gibt das Mitglied 5 die Arbeitsprozess-Daten APD über den Fällschritt FS des gefällten Baumabschnitts 4 mittels der Ausgabe- und Eingabe-Einrichtung 3 ein bzw. die Eingabe IN weist von den ausgegebenen Arbeitsprozess-Daten voAPD abweichende Arbeitsprozess-Daten nAPD auf. Ausgelöst durch die Eingabe IN von den Arbeitsprozess-Daten nAPD wird das Abgleichen ausgeführt. Das Abgleichen weist auf: Vergleichen von den Arbeitsprozess-Daten iAPD eingegeben mit den vorgegebenen Arbeitsprozess-Daten voAPD ausgegeben. Dabei gibt es die Mindestabweichung MA. Somit werden die vorgegebenen Arbeitsprozess-Daten voAPD über den Entastungsschritt EA des, insbesondere gefällten und eigentlich, zu entastenden Baumabschnitts 4 basierend auf der Mindestabweichung MA und/oder den eingegebenen Arbeitsprozess-Daten iAPD angepasst, insbesondere anhand des Optimierungskriteriums OK, insbesondere des Gefahrenreduzierungsoptimierungskriteriums SOK. Insbesondere werden die vorgegebenen Arbeitsprozess-Daten vAPD über den Entastungsschritt EA nicht zur Ausgabe bzw. der Entastungsschritt EA, insbesondere die Ausführung des Entastungsschritts EA, wird nicht freigegeben und/oder nicht ausgegeben. Insbesondere stattdessen, werden basierend auf der Mindestabweichung MA und/oder den eingegebenen Arbeitsprozess-Daten iAPD Arbeitsprozess-Daten APD über den Hängerbeseitigungsschritt HB des, insbesondere gefällten und, umzuziehenden Baumabschnitts 4 vorgegeben, insbesondere anhand des Optimierungskriteriums OK, insbesondere des Gefahrenreduzierungsoptimierungskriteriums SOK und/oder des Gruppenarbeitsfortschrittoptimierungskriteriums FOK und/oder des Zeitoptimierungskriteriums ZOK. In Folge des Abgleichens, insbesondere der Mindestabweichung MA bzw. des Anpassens und/oder des Vorgebens, gibt mindestens die, insbesondere andere, der Ausgabe- und Eingabe-Einrichtungen 3 die, insbesondere vorgegebenen, Arbeitsprozess-Daten vAPD über den Hängerbeseitigungsschritt HB des, insbesondere gefällten und, umzuziehenden Baumabschnitts 4 an mindestens das, insbesondere andere, der Mitglieder 5 der Arbeitsgruppe 6 aus bzw. den Hängerbeseitigungsschritt HB, insbesondere die Ausführung des Hängerbeseitigungsschritts HB, frei bzw. gibt die Information Info über die Mindestabweichung MA und/oder das Anpassen und/oder die angepassten Arbeitsprozess-Daten aAPD und/oder das Optimierungskriterium OK aus. In Folge der Ausgabe unterbricht das Mitglied 5 den Rückeschritt RE bzw. schiebt diesen auf. Insbesondere stattdessen, führt das Mitglied 5 den Hängerbeseitigungsschritt HB aus bzw. zieht den Baumabschnitt 4 um, insbesondere erfolgreich. In Folge der Ausführung des Hängerbeseitigungsschritts HB bzw. der Umziehung des umgezogenen Baumabschnitts 4 gibt das Mitglied 5 die Arbeitsprozess-Daten APD über den Hängerbeseitigungsschritt HB des umgezogenen Baumabschnitts 4 mittels der Ausgabe- und Eingabe-Einrichtung 3 ein bzw. bestätigt die ausgegebenen Arbeitsprozess-Daten voAPD. Ausgelöst durch die Eingabe IN von den Arbeitsprozess-Daten nAPD wird das Abgleichen ausgeführt. Das Abgleichen weist auf: Vergleichen von den Arbeitsprozess-Daten iAPD eingegeben mit den vorgegebenen Arbeitsprozess-Daten voAPD ausgegeben. Dabei gibt es keine Mindestabweichung. In Folge des Abgleichens gibt mindestens eine, insbesondere nochmals andere, der Ausgabe- und Eingabe-Einrichtungen 3 die, insbesondere vorgegebenen, Arbeitsprozess-Daten vAPD über den Entastungsschritt EA des, insbesondere gefällten und/oder umgezogenen und, zu entastenden Baumabschnitts 4 an mindestens eines, insbesondere ein nochmals anderes, der Mitglieder 5 der Arbeitsgruppe 6 aus bzw. den Entastungsschritt EA, insbesondere die Ausführung des Entastungsschritts EA, frei.

Außerdem weist das Verfahren den Schritt auf: Übertragen von den, insbesondere vorgegebenen, Arbeitsprozess-Daten vAPD von einer externen Datenbank 9 zu einem Gateway 10, insbesondere einem Smartphone 11, in dem Peer-to-Peer-Netzwerk 7, insbesondere kabellos basierend auf einer langreichweitigen Übertragungs-Technologie 12.

Weiter weist das Forst-Kommunikations-System 1 mindestens eine mobile Kommunikations-Zwischenstation 13 auf. In dem gezeigten Ausführungsbeispiel weist das Forst-Kommunikations-System 1 acht Kommunikations-Zwischenstationen 13 auf. In alternativen Ausführungsbeispielen kann das Forst-Kommunikations-System mindestens zwei, insbesondere mindestens fünf, insbesondere mindestens zehn, Kommunikations-Zwischenstationen aufweisen.

Zusätzlich oder alternativ wird das Abgleichen zwischen mindestens einem der Kommunikations-Geräte 2 und einer, insbesondere der und/oder zugeordneten, Kommunikations-Zwischenstation 13 in dem Peer-to-Peer-Netzwerk 7 mittels kabellosen Übertragens basierend auf einer kurzreichweitigen Übertragungs-Technologie 14 und von der Kommunikations-Zwischenstation 13 mittels des kabellosen Übertragens basierend auf der mittelreichweitigen Übertragungs-Technologie 8 ausgeführt.

In alternativen Ausführungsbeispielen braucht oder kann das Forst-Kommunikations-System keine Kommunikations-Zwischenstation aufweisen. Zusätzlich oder alternativ kann in alternativen Ausführungsbeispielen von dem Kommunikations-Gerät, insbesondere selbst bzw. unmittelbar, das kabellose Übertragen basierend auf der mittelreichweitigen Übertragungs-Technologie ausgeführt werden. In anderen Worten: in alternativen Ausführungsbeispielen kann das Kommunikations-Gerät, insbesondere selbst bzw. unmittelbar, zum kabellosen Übertragen basierend auf der mittelreichweitigen Übertragungs-Technologie ausgebildet sein.

Zudem ist mindestens eines der Kommunikations-Geräte 2 ein körpergetragenes, insbesondere kopfgetragenes, und/oder handgetragenes Kommunikations-Gerät 2`, wie in Fig. 2 gezeigt. Zusätzlich oder alternativ ist mindestens die Kommunikations-Zwischenstation 13 eine körpergetragene, insbesondere kopfgetragene, und/oder handgetragene Kommunikations-Zwischenstation 13`. Insbesondere sind/ist das Kommunikations-Gerät und/oder die Kommunikations-Zwischenstation 13' an einer Forstarbeiter-Schutzausrüstung 15, insbesondere einem Schutzhelm 16 und/oder einem Gesichts- und/oder Gehörschutz 17 und/oder einer Schutzbrille und/oder einem Schutzhandschuh, mindestens angeordnet, insbesondere integriert.

In dem gezeigten Ausführungsbeispiel weist mindestens eines der Kommunikations-Geräte 2 ein Smartphone auf, insbesondere ist ein Smartphone. Zusätzlich weist mindestens eine der Kommunikations-Zwischenstationen 13 ein Headset auf, insbesondere ist ein Headset. In alternativen Ausführungsbeispielen kann zusätzlich oder alternativ mindestens eines der Kommunikations-Geräte ein Headset aufweisen, insbesondere sein.

Des Weiteren weist das Verfahren den Schritt auf: eine Sprach-Nachricht SN, insbesondere von einem der Mitglieder 5 und/oder zwischen den Kommunikations-Zwischenstationen 13, kabellos Übertragen basierend auf der mittelreichweitigen Übertragungs-Technologie 8 in dem Peer-to-Peer-Netzwerk 7.

Außerdem weist das Verfahren den Schritt auf: Notfall-Daten und/oder -Nachrichten NDN, insbesondere von einem der Mitglieder und/oder zwischen den Kommunikations-Zwischenstationen 13, kabellos Übertragen basierend auf der mittelreichweitigen Übertragungs-Technologie 8 in dem Peer-to-Peer-Netzwerk 7 und/oder basierend auf der langreichweitigen Übertragungs-Technologie 12.

Weiter weist die mittelreichweitige Übertragungs-Technologie 8 eine maximale Reichweite 8R von 400 m auf. Zusätzlich oder alternativ weist die mittelreichweitige Übertragungs-Technologie 8 Bluetooth-Classic-Übertragungs-Technologie BC auf, insbesondere ist Bluetooth-Classic-Übertragungs-Technologie BC. Weiter zusätzlich oder alternativ nutzt die mittelreichweitige Übertragungs-Technologie 8 eine 2,4 GHz Trägerfrequenz 8f. Weiter zusätzlich oder alternativ weist die langreichweitige Übertragungs-Technologie 12 eine minimale Reichweite 12R von 1000 m auf. Weiter zusätzlich oder alternativ weist die langreichweitige Übertragungs-Technologie 12 Narrow-Band-Internet-of-Things-Übertragungs-Technologie NB-loT, Long-Term-Evolution-Übertragungs-Technologie LTE, Long-Range-Übertragungs-Technologie LoRa und/oder Sigfox-Übertragungs-Technologie SIGFOX auf, insbesondere ist Narrow-Band-Internet-of-Things-Übertragungs-Technologie NB-loT, Long-Term-Evolution-Übertragungs-Technologie LTE, Long-Range-Übertragungs-Technologie LoRa und/oder Sigfox-Übertragungs-Technologie SIGFOX. Weiter zusätzlich oder alternativ weist die kurzreichweitige Übertragungs-Technologie 14 eine maximale Reichweite 14R von 10 m auf. Weiter zusätzlich oder alternativ weist die kurzreichweitige Übertragungs-Technologie 14 Bluetooth-Low-Energy-Übertragungs-Technologie BLE und/oder ZigBee-Übertragungs-Technologie ZB auf, insbesondere ist Bluetooth-Low-Energy-Übertragungs-Technologie BLE und/oder ZigBee-Übertragungs-Technologie ZB.

Zudem weisen die Kommunikations-Geräte 2 jeweils ein Speichermedium 18 auf, wie in Fig. 2 gezeigt. Das Speichermedium 18 ist zum Speichern der Arbeitsprozess-Daten APD ausgebildet, insbesondere speichert.

Wie die gezeigten und oben erläuterten Ausführungsbeispiele deutlich machen, stellt die Erfindung ein vorteilhaftes Verfahren zum Betreiben eines Forst-Kommunikations-Systems und ein vorteilhaftes Forst-Kommunikations-System bereit, das jeweils verbesserte Eigenschaften aufweist, insbesondere ein effizientes und/oder gefahrenreduziertes Arbeiten im Forst ermöglicht.

## Patentansprüche

1. Verfahren zum Betreiben eines Forst-Kommunikations-Systems (1),
- wobei das Forst-Kommunikations-System (1) aufweist:
- mehrere mobile Kommunikations-Geräte (2), wobei die Kommunikations-Geräte (2) jeweils aufweisen:
- eine Ausgabe- und Eingabe-Einrichtung (3), wobei die Ausgabe- und Eingabe-Einrichtung (3) zur Ausgabe und zur Eingabe von Arbeitsprozess-Daten (APD) über Arbeitsschritte (AS) zu bearbeitender und/oder bearbeiteter Baumabschnitte (4) betreffend ein Mitglied (5) in einer Arbeitsgruppe (6) ausgebildet ist,
- **dadurch gekennzeichnet, dass** das Verfahren den Schritt aufweist:
- automatisches Abgleichen der Arbeitsprozess-Daten (APD) zwischen den Kommunikations-Geräten (2) in einem Peer-to-Peer-Netzwerk (7) mittels kabellosen Übertragens basierend auf einer mittelreichweitigen Übertragungs-Technologie (8),
- wobei ausgelöst durch jede, insbesondere neue, Eingabe (IN) von neuen Arbeitsprozess-Daten (nAPD), insbesondere mittels einer der Ausgabe- und Eingabe-Einrichtungen (3), jeweils das Abgleichen neu ausgeführt wird,
- wobei die Eingabe eine Bestätigung der ausgegebenen Arbeitsprozess-Daten und/oder von den ausgegebenen Arbeitsprozess-Daten abweichende Arbeitsprozess-Daten aufweist,
- wobei das Abgleichen aufweist: automatisches Vergleichen von Arbeitsprozess-Daten (iAPD) eingegeben mittels einer der Ausgabe- und Eingabe-Einrichtungen (3) mit vorgegebenen Arbeitsprozess-Daten (voAPD) ausgegeben mittels der Ausgabe- und Eingabe-Einrichtung (3) und bei einer Mindestabweichung (MA) der vorgegebenen Arbeitsprozess-Daten (voAPD) und der eingegebenen Arbeitsprozess-Daten (iAPD) voneinander automatisches Anpassen der vorgegebenen Arbeitsprozess-Daten (voAPD) über Arbeitsschritte (AS) zu bearbeitender Baumabschnitte (4) basierend auf der Mindestabweichung (MA) und/oder den eingegebenen Arbeitsprozess-Daten (iAPD) anhand eines Optimierungskriteriums (OK),
- wobei das Optimierungskriterium (OK) ein Gefahrenreduzierungsoptimierungskriterium (SOK), ein Abstandsoptimierungskriterium (AOK) und/oder ein Gruppenarbeitsfortschrittoptimierungskriterium (FOK), ein Zeitoptimierungskriterium (ZOK) und/oder ein Wertoptimierungskriterium (WOK) ist,
- wobei das Verfahren den Schritt aufweist: bei der Mindestabweichung (MA) und bei dem Anpassen anhand des Gefahrenreduzierungsoptimierungskriteriums (SOK) Ausgeben einer Information (Info) über die Mindestabweichung (MA) und/oder das Anpassen und/oder die angepassten Arbeitsprozess-Daten (aAPD) und/oder das Optimierungskriterium (OK) mittels mindestens einer der Ausgabe- und Eingabe-Einrichtungen (3).

2. Verfahren nach Anspruch 1,
- wobei die Arbeitsprozess-Daten (APD) über mindestens einen Pflanzschritt (PS), mindestens einen Jungbestandspflegeschritt (JP), mindestens einen Rückschnittschritt (RS), mindestens einen Wertastungsschritt (WA), mindestens einen Fällschritt (FS), mindestens einen Entastungsschritt (EA), mindestens einen Ablängschritt (AL), mindestens einen Rückeschritt (RE), mindestens einen Hängerbeseitigungsschritt (HB), mindestens eine Reihenfolge (I, II, III, IV) und/oder mindestens einen Ort (PO, JO, SO, WO, FO, EO, AO, RO, HO) mindestens eines Teils der Arbeitsschritte (AS) und/oder mindestens eines Teils der Baumabschnitte (4), mindestens eine Baumart (BA), mindestens eine Baumabschnittslänge (BL), mindestens einen Baumabschnittsdurchmesser (BD), mindestens eine Baumabschnittsmenge (BM), mindestens eine Baumabschnittsqualität (BQ) und/oder mindestens einen Baumabschnittswert (BW) sind.

3. Verfahren nach einem der vorhergehenden Ansprüche,
- wobei das Verfahren den Schritt aufweist: Freigeben der angepassten Arbeitsprozess-Daten (aAPD) zum manuellen Anpassen, insbesondere mittels mindestens einer der Ausgabe- und Eingabe-Einrichtungen (3).

4. Verfahren nach einem der vorhergehenden Ansprüche,
- wobei das Verfahren den Schritt aufweist: Übertragen von den, insbesondere vorgegebenen, Arbeitsprozess-Daten (vAPD) von einer externen Datenbank (9) zu einem Gateway (10), insbesondere einem Smartphone (11), in dem Peer-to-Peer-Netzwerk (7), insbesondere kabellos basierend auf einer langreichweitigen Übertragungs-Technologie (12).

5. Verfahren nach einem der vorhergehenden Ansprüche,
- wobei das Forst-Kommunikations-System (1) mindestens eine mobile Kommunikations-Zwischenstation (13) aufweist, und/oder
- wobei das Abgleichen zwischen mindestens einem der Kommunikations-Geräte (2) und einer, insbesondere zugeordneten, Kommunikations-Zwischenstation (13) in dem Peer-to-Peer-Netzwerk (7) mittels kabellosen Übertragens basierend auf einer kurzreichweitigen Übertragungs-Technologie (14) und von der Kommunikations-Zwischenstation (13) mittels des kabellosen Übertragens basierend auf der mittelreichweitigen Übertragungs-Technologie (6) ausgeführt wird.

6. Verfahren nach einem der vorhergehenden Ansprüche, insbesondere nach Anspruch 5,
- wobei mindestens eines der Kommunikations-Geräte (2) ein körpergetragenes, insbesondere kopfgetragenes, und/oder handgetragenes Kommunikations-Gerät (2') ist, und/oder wobei mindestens die Kommunikations-Zwischenstation (13) eine körpergetragene, insbesondere kopfgetragene, und/oder handgetragene Kommunikations-Zwischenstation (13') ist,
- insbesondere wobei das Kommunikations-Gerät und/oder die Kommunikations-Zwischenstation (13') an einer Forstarbeiter-Schutzausrüstung (15), insbesondere einem Schutzhelm (16) und/oder einem Gesichts- und/oder Gehörschutz (17) und/oder einer Schutzbrille und/oder einem Schutzhandschuh, mindestens angeordnet, insbesondere integriert, sind/ist.

7. Verfahren nach einem der vorhergehenden Ansprüche, insbesondere nach Anspruch 5,
- wobei das Verfahren den Schritt aufweist: eine Sprach-Nachricht (SN), insbesondere von einem der Mitglieder (5) und/oder zwischen den Kommunikations-Zwischenstationen (13), kabellos Übertragen basierend auf der mittelreichweitigen Übertragungs-Technologie (8) in dem Peer-to-Peer-Netzwerk (7).

8. Verfahren nach einem der vorhergehenden Ansprüche,
- wobei das Verfahren den Schritt aufweist: Notfall-Daten und/oder -Nachrichten (NDN), insbesondere von einem der Mitglieder (5), kabellos Übertragen basierend auf der mittelreichweitigen Übertragungs-Technologie (8) in dem Peer-to-Peer-Netzwerk (7) und/oder basierend auf einer langreichweitigen Übertragungs-Technologie (12).

9. Verfahren nach einem der vorhergehenden Ansprüche, insbesondere nach Anspruch 4 und/oder 5 und/oder 8,
- wobei die mittelreichweitige Übertragungs-Technologie (8) eine maximale Reichweite (8R) von 400 m aufweist, und/oder
- wobei die mittelreichweitige Übertragungs-Technologie (8) Bluetooth-Classic-Übertragungs-Technologie (BC) aufweist, insbesondere ist, und/oder
- wobei die mittelreichweitige Übertragungs-Technologie (8) eine 2,4 GHz Trägerfrequenz (8f) nutzt, und/oder
- wobei die langreichweitige Übertragungs-Technologie (12) eine minimale Reichweite (12R) von 1000 m aufweist, und/oder
- wobei die langreichweitige Übertragungs-Technologie (12) Narrow-Band-Internet-of-Things-Übertragungs-Technologie (NB-loT), Long-Term-Evolution-Übertragungs-Technologie (LTE), Long-Range-Übertragungs-Technologie (LoRa) und/oder Sigfox-Übertragungs-Technologie (SIGFOX) aufweist, insbesondere ist, und/oder
- wobei die kurzreichweitige Übertragungs-Technologie (14) eine maximale Reichweite (14R) von 10 m aufweist, und/oder
- wobei die kurzreichweitige Übertragungs-Technologie (14) Bluetooth-Low-Energy-Übertragungs-Technologie (BLE) und/oder ZigBee-Übertragungs-Technologie (ZB) aufweist, insbesondere ist.

10. Verfahren nach einem der vorhergehenden Ansprüche,
- wobei die Kommunikations-Geräte (2) jeweils ein Speichermedium (18) aufweisen, wobei das Speichermedium zum Speichern der Arbeitsprozess-Daten (APD) ausgebildet ist.

11. Forst-Kommunikations-System (1), insbesondere zum Ausführen eines Verfahrens nach einem der vorhergehenden Ansprüche,
- wobei das Forst-Kommunikations-System (1) aufweist:
- mehrere mobile Kommunikations-Geräte (2), wobei die Kommunikations-Geräte (2) jeweils aufweisen:
- eine Ausgabe- und Eingabe-Einrichtung (3), wobei die Ausgabe- und Eingabe-Einrichtung (3) zur Ausgabe und zur Eingabe von Arbeitsprozess-Daten (APD) über Arbeitsschritte (AS) zu bearbeitender und/oder bearbeiteter Baumabschnitte (4) betreffend ein Mitglied (5) in einer Arbeitsgruppe (6) ausgebildet ist,
- **dadurch gekennzeichnet, dass** das Forst-Kommunikations-System (1) zum automatischen Abgleichen der Arbeitsprozess-Daten (APD) zwischen den Kommunikations-Geräten (2) in einem Peer-to-Peer-Netzwerk (7) mittels kabellosen Übertragens basierend auf einer mittelreichweitigen Übertragungs-Technologie (8) ausgebildet ist,
- wobei ausgelöst durch jede, insbesondere neue, Eingabe (IN) von neuen Arbeitsprozess-Daten (nAPD), insbesondere mittels einer der Ausgabe- und Eingabe-Einrichtungen (3), jeweils das Abgleichen neu ausgeführt wird,
- wobei die Eingabe eine Bestätigung der ausgegebenen Arbeitsprozess-Daten und/oder von den ausgegebenen Arbeitsprozess-Daten abweichende Arbeitsprozess-Daten aufweist,
- wobei das Abgleichen aufweist: automatisches Vergleichen von Arbeitsprozess-Daten (iAPD) eingegeben mittels einer der Ausgabe- und Eingabe-Einrichtungen (3) mit vorgegebenen Arbeitsprozess-Daten (voAPD) ausgegeben mittels der Ausgabe- und Eingabe-Einrichtung (3) und bei einer Mindestabweichung (MA) der vorgegebenen Arbeitsprozess-Daten (voAPD) und der eingegebenen Arbeitsprozess-Daten (iAPD) voneinander automatisches Anpassen der vorgegebenen Arbeitsprozess-Daten (voAPD) über Arbeitsschritte (AS) zu bearbeitender Baumabschnitte (4) basierend auf der Mindestabweichung (MA) und/oder den eingegebenen Arbeitsprozess-Daten (iAPD) anhand eines Optimierungskriteriums (OK),
- wobei das Optimierungskriterium (OK) ein Gefahrenreduzierungsoptimierungskriterium (SOK), ein Abstandsoptimierungskriterium (AOK) und/oder ein Gruppenarbeitsfortschrittoptimierungskriterium (FOK), ein Zeitoptimierungskriterium (ZOK) und/oder ein Wertoptimierungskriterium (WOK) ist,
- wobei das Forst-Kommunikations-System (1) bei der Mindestabweichung (MA) und bei dem Anpassen anhand des Gefahrenreduzierungsoptimierungskriteriums (SOK) zum Ausgeben einer Information (Info) über die Mindestabweichung (MA) und/oder das Anpassen und/oder die angepassten Arbeitsprozess-Daten (aAPD) und/oder das Optimierungskriterium (OK) mittels mindestens einer der Ausgabe- und Eingabe-Einrichtungen (3) ausgebildet ist.

## Claims

1. Method for operating a forest communication system (1),
- wherein the forest communication system (1) comprises:
- multiple mobile communication apparatus (2), the communication apparatus (2) each comprising:
- an output and input device (3), the output and input device (3) being designed for the output and input of work process data (APD) relevant to one member (5) in a working group (6) about work steps (AS) on tree sections (4) that are to be worked on and/or have been worked on,
- **characterized in that** the method comprises the step of:
- automatically reconciling the work process data (APD) between the communication apparatus (2) in a peer-to-peer network (7) by means of wireless transmission on the basis of a medium-range transmission technology (8),
- wherein, on the basis of triggering by any, in particular new, input (IN) of new work process data (nAPD), in particular by means of one of the output and input devices (3), the respective reconciling is performed afresh,
- wherein the input comprises confirmation of the output work process data and/or work process data that differ from the output work process data,
- wherein the reconciling comprises: automatically comparing work process data (iAPD) that have been input by means of one of the output and input devices (3) with predefined work process data (voAPD) that have been output by means of the output and input device (3) and, when there is a minimum variance (MA) between the predefined work process data (voAPD) and the input work process data (iAPD), automatically adapting the predefined work process data (voAPD) about work steps (AS) on tree sections (4) that are to be worked on on the basis of the minimum variance (MA) and/or the input work process data (iAPD) on the basis of an optimization criterion (OK),
- wherein the optimization criterion (OK) is a danger reduction optimization criterion (SOK), a distance optimization criterion (AOK) and/or a group work progress optimization criterion (FOK), a time optimization criterion (ZOK) and/or a value optimization criterion (WOK),
- wherein the method comprises the step of: responding to the minimum variance (MA) and responding to the adapting on the basis of the danger reduction optimization criterion (SOK) by outputting information (Info) about the minimum variance (MA) and/or the adapting and/or the adapted work process data (aAPD) and/or the optimization criterion (OK) by means of at least one of the output and input devices (3).

2. Method according to Claim 1,
- wherein the work process data (APD) are about at least one planting step (PS), at least one young stock maintenance step (JP), at least one cutting- back step (RS), at least one pruning step (WA), at least one felling step (FS), at least one limbing step (EA), at least one cutting-to-length step (AL), at least one log-removal step (RE), at least one leaning-tree clearance step (HB), at least one sequence (I, II, III, IV) and/or at least one location (PO, JO, SO, WO, FO, EO, AO, RO, HO) of at least some of the work steps (AS) and/or of at least some of the tree sections (4), at least one tree type (BA), at least one tree section length (BL), at least one tree section diameter (BD), at least one tree section quantity (BM), at least one tree section quality (BQ) and/or at least one tree section value (BW).

3. Method according to one of preceding claims,
- wherein the method comprises the step of: enabling the adapted work process data (aAPD) for manual adapting, in particular by means of at least one of the output and input devices (3).

4. Method according to one of the preceding claims,
- wherein the method comprises the step of: transmitting the, in particular predefined, work process data (vAPD) from an external database (9) to a gateway (10), in particular a smartphone (11), in the peer-to-peer network (7), in particular wirelessly on the basis of a long-range transmission technology (12).

5. Method according to one of the preceding claims,
- wherein the forest communication system (1) has at least one mobile communication intermediate station (13), and/or
- wherein the reconciling is performed between at least one of the communication apparatus (2) and a, in particular associated, communication intermediate station (13) in the peer-to-peer network (7) by means of wireless transmission on the basis of a short-range transmission technology (14) and by the communication intermediate station (13) by means of the wireless transmission on the basis of the medium-range transmission technology (6).

6. Method according to one of the preceding claims, in particular according to Claim 5,
- wherein at least one of the communication apparatus (2) is a body-worn, in particular head-worn, and/or handheld communication device (2'), and/or wherein at least the communication intermediate station (13) is a body-worn, in particular head-worn, and/or handheld communication intermediate station (13'),
- in particular wherein the communication device and/or the communication intermediate station (13') is/are at least arranged, in particular integrated, on an item of forestry worker protective equipment (15), in particular a protective helmet (16) and/or a face and/or hearing protector (17) and/or protective goggles and/or a protective glove.

7. Method according to one of the preceding claims, in particular according to Claim 5,
- wherein the method comprises the step of: wirelessly transmitting a voice message (SN), in particular from one of the members (5) and/or between the communication intermediate stations (13), on the basis of the medium-range transmission technology (8) in the peer-to-peer network (7).

8. Method according to one of the preceding claims,
- wherein the method comprises the step of: wirelessly transmitting emergency data and/or messages (NDN), in particular from one of the members (5), on the basis of the medium-range transmission technology (8) in the peer-to-peer network (7) and/or on the basis of a long-range transmission technology (12).

9. Method according to one of the preceding claims, in particular according to Claim 4 and/or 5 and/or 8,
- wherein the medium-range transmission technology (8) has a maximum range (8R) of 400 m, and/or
- wherein the medium-range transmission technology (8) comprises, in particular is, Bluetooth Classic transmission technology (BC), and/or
- wherein the medium-range transmission technology (8) uses a 2.4 GHz carrier frequency (8f), and/or
- wherein the long-range transmission technology (12) has a minimum range (12R) of 1000 m, and/or
- wherein the long-range transmission technology (12) comprises, in particular is, narrowband Internet of Things transmission technology (NB-IoT), Long-Term Evolution transmission technology (LTE), long-range transmission technology (LoRa) and/or SigFox transmission technology (SIGFOX), and/or
- wherein the short-range transmission technology (14) has a maximum range (14R) of 10 m, and/or
- wherein the short-range transmission technology (14) comprises, in particular is, Bluetooth Low Energy transmission technology (BLE) and/or ZigBee transmission technology (ZB).

10. Method according to one of the preceding claims,
- wherein the communication apparatus (2) each comprise a storage medium (18), the storage medium being designed for the storage of the work process data (APD).

11. Forest communication system (1), in particular for performing a method according to one of the preceding claims,
- wherein the forest communication system (1) comprises:
- multiple mobile communication apparatus (2), the communication apparatus (2) each comprising:
- an output and input device (3), the output and input device (3) being designed for the output and input of work process data (APD) relevant to one member (5) in a working group (6) about work steps (AS) on tree sections (4) that are to be worked on and/or have been worked on,
- **characterized in that** the forest communication system (1) is designed for automatically reconciling of the work process data (APD) between the communication apparatus (2) in a peer-to-peer network (7) by means of wireless transmission on the basis of a medium-range transmission technology (8),
- wherein, on the basis of triggering by any, in particular new, input (IN) of new work process data (nAPD), in particular by means of one of the output and input devices (3), the respective reconciling is performed afresh,
- wherein the input comprises confirmation of the output work process data and/or work process data that differ from the output work process data,
- wherein the reconciling comprises: automatically comparing work process data (iAPD) that have been input by means of one of the output and input devices (3) with predefined work process data (voAPD) that have been output by means of the output and input device (3) and, when there is a minimum variance (MA) between the predefined work process data (voAPD) and the input work process data (iAPD), automatically adapting the predefined work process data (voAPD) about work steps (AS) on tree sections (4) that are to be worked on on the basis of the minimum variance (MA) and/or the input work process data (iAPD) on the basis of an optimization criterion (OK),
- wherein the optimization criterion (OK) is a danger reduction optimization criterion (SOK), a distance optimization criterion (AOK) and/or a group work progress optimization criterion (FOK), a time optimization criterion (ZOK) and/or a value optimization criterion (WOK),
- wherein the forest communication system (1) is designed responding to the minimum variance (MA) and responding to the adapting on the basis of the danger reduction optimization criterion (SOK) for outputting information (Info) about the minimum variance (MA) and/or the adapting and/or the adapted work process data (aAPD) and/or the optimization criterion (OK) by means of at least one of the output and input devices (3). ---

## Revendications

1. Procédé pour faire fonctionner un système de communication forestier (1),
- le système de communication forestier (1) possédant :
- plusieurs appareils de communication (2) mobiles, les appareils de communication (2) possédant respectivement :
- un dispositif de sortie et d'entrée (3), le dispositif de sortie et d'entrée (3) étant configuré pour la sortie et l'entrée de données de processus de travail (APD) à propos d'étapes de travail (AS) pour des sections d'arbre (4) à traiter et/ou traitées concernant un membre (5) dans un groupe de travail (6),
- **caractérisé en ce que** le procédé comprend les étapes suivantes :
- alignement automatique des données de processus de travail (APD) entre les appareils de communication (2) dans un réseau poste à poste (7) au moyen de la transmission sans fil basée sur une technologie de transmission à moyenne portée (8),
- l'alignement étant à chaque fois nouvellement effectué, déclenché par chaque entrée (IN), notamment nouvelle, de nouvelles données de processus de travail (nAPD), notamment au moyen de l'un des dispositifs de sortie et d'entrée (3),
- l'entrée comprenant une confirmation des données de processus de travail délivrées en sortie et/ou des données de processus de travail différentes des données de processus de travail délivrées en sortie,
- l'alignement comprenant : comparaison automatique de données de processus de travail (iAPD) entrées au moyen de l'un des dispositifs de sortie et d'entrée (3) avec des données de processus de travail prédéfinies (voAPD) délivrées en sortie au moyen du dispositif de sortie et d'entrée (3) et, dans le cas d'un écart minimal (MA) entre les données de processus de travail prédéfinies (voAPD) et les données de processus de travail (iAPD) entrées entre elles, adaptation automatique des données de processus de travail prédéfinies (voAPD) à propos des étapes de travail (AS) pour les sections d'arbre (4) à traiter sur la base de l'écart minimal (MA) et/ou des données de processus de travail (iAPD) entrées à l'aide d'un critère d'optimisation (OK),
- le critère d'optimisation (OK) étant un critère d'optimisation de réduction de danger (SOK), un critère d'optimisation de distance (AOK) et/ou un critère d'optimisation de progression de travail de groupe (FOK), un critère d'optimisation de temps (ZOK) et/ou un critère d'optimisation de valeur (WOK),
- le procédé comprenant l'étape suivante : lors de l'écart minimal (MA) et lors de l'adaptation à l'aide du critère d'optimisation de réduction de danger (SOK), délivrance en sortie d'une information (Info) à propos de l'écart minimal (MA) et/ou l'adaptation et/ou les données de processus de travail adaptées (aAPD) et/ou le critère d'optimisation (OK) au moyen d'au moins l'un des dispositifs de sortie et d'entrée (3).

2. Procédé selon la revendication 1,
- les données de processus de travail (APD) étant à propos d'au moins une étape de plantation (PS), au moins une étape d'entretien de jeune peuplement (JP), au moins une étape de taille (RS), au moins une étape d'élagage (WA), au moins une étape d'abattage (FS), au moins une étape d'ébranchage (EA), au moins une étape de tronçonnage (AL), au moins une étape de débardage (RE), au moins une étape d'élimination d'accrochage (HB), au moins une séquence (I, II, III, IV) et/ou au moins un emplacement (PO, JO, SO, WO, FO, EO, AO, RO, HO) d'au moins une partie des étapes de travail (AS) et/ou d'au moins une partie des sections d'arbre (4), au moins un type d'arbre (BA), au moins une longueur de section d'arbre (BL), au moins un diamètre de section d'arbre (BD), au moins une quantité de section d'arbre (BM), au moins une qualité de section d'arbre (BQ) et/ou au moins une valeur de section d'arbre (BW).

3. Procédé selon l'une des revendications précédentes,
- le procédé comprenant l'étape suivante : libération des données de processus de travail adaptées (aAPD) pour une adaptation manuelle, notamment au moyen d'au moins un des dispositifs de sortie et d'entrée (3).

4. Procédé selon l'une des revendications précédentes,
- le procédé comprenant l'étape suivante : transmission des données de processus de travail (vAPD), notamment prédéfinies, d'une base de données externe (9) à une passerelle (10), notamment un smartphone (11), dans le réseau poste à poste (7), notamment sans fil sur la base d'une technologie de transmission à longue portée (12) .

5. Procédé selon l'une des revendications précédentes,
- le système de communication forestier (1) comprenant au moins une station intermédiaire de communication mobile (13), et/ou
- l'alignement entre au moins l'un des appareils de communication (2) et une station intermédiaire de communication (13), notamment associée, dans le réseau poste à poste (7) étant effectué au moyen d'une transmission sans fil basée sur une technologie de transmission à courte portée (14) et étant effectué par la station intermédiaire de communication (13) au moyen de la transmission sans fil basée sur la technologie de transmission à moyenne portée (6).

6. Procédé selon l'une des revendications précédentes, notamment selon la revendication 5,
- au moins l'un des appareils de communication (2) étant un appareil de communication (2') porté sur le corps, notamment porté sur la tête, et/ou porté à la main, et/ou au moins la station intermédiaire de communication (13) étant une station intermédiaire de communication portée sur le corps (13'), notamment portée sur la tête, et/ou portée à la main,
- l'appareil de communication et/ou la station intermédiaire de communication (13') étant notamment au moins disposés sur, notamment intégrés dans, un équipement de protection d'ouvrier forestier (15), notamment un casque de protection (16) et/ou une protection faciale et/ou auditive (17) et/ou des lunettes de protection et/ou un gant de protection.

7. Procédé selon l'une des revendications précédentes, notamment selon la revendication 5,
- le procédé comprenant l'étape suivante : transmission sans fil d'un message vocal (SN), notamment par l'un des membres (5) et/ou entre les stations intermédiaires de communication (13), sur la base de la technologie de transmission à moyenne portée (8) dans le réseau poste à poste (7).

8. Procédé selon l'une des revendications précédentes,
- le procédé comprenant l'étape suivante : transmission sans fil de données et/ou de messages d'urgence (NDN), notamment par l'un des membres (5), sur la base de la technologie de transmission à moyenne portée (8) dans le réseau poste à poste (7) et/ou sur la base d'une technologie de transmission à longue portée (12) .

9. Procédé selon l'une des revendications précédentes, notamment selon la revendication 4 et/ou 5 et/ou 8,
- la technologie de transmission à moyenne portée (8) présentant une portée maximale (8R) de 400 m, et/ou
- la technologie de transmission à moyenne portée (8) présentant, notamment étant, la technologie de transmission Bluetooth Classic (BC), et/ou
- la technologie de transmission à moyenne portée (8) utilisant une fréquence porteuse (8f) de 2,4 GHz, et/ou
- la technologie de transmission à longue portée (12) présentant une portée minimale (12R) de 1000 m, et/ou
- la technologie de transmission à longue portée (12) présentant, notamment étant, la technologie de transmission de l'Internet des objets à bande étroite (NB-IoT), la technologie de transmission d'évolution à long terme (LTE), la technologie de transmission à longue portée (LoRa) et/ou la technologie de transmission Sigfox (SIGFOX), et/ou
- la technologie de transmission à courte portée (14) présentant une portée maximale (14R) de 10 m, et/ou
- la technologie de transmission à courte portée (14) présentant, notamment étant, la technologie de transmission Bluetooth Low Energy (BLE) et/ou la technologie de transmission ZigBee (ZB).

10. Procédé selon l'une des revendications précédentes,
- les appareils de communication (2) possédant chacun un support de stockage (18), le support de stockage étant configuré pour stocker les données de processus de travail (APD).

11. Système de communication forestier (1), notamment pour la mise en œuvre d'un procédé selon l'une des revendications précédentes,
- le système de communication forestier (1) possédant :
- plusieurs appareils de communication (2) mobiles, les appareils de communication (2) possédant respectivement :
- un dispositif de sortie et d'entrée (3), le dispositif de sortie et d'entrée (3) étant configuré pour la sortie et l'entrée de données de processus de travail (APD) à propos d'étapes de travail (AS) pour des sections d'arbre (4) à traiter et/ou traitées concernant un membre (5) dans un groupe de travail (6),
- **caractérisé en ce que** le système de communication forestier (1) est configuré pour l'alignement automatique des données de processus de travail (APD) entre les appareils de communication (2) dans un réseau poste à poste (7) au moyen de la transmission sans fil basée sur une technologie de transmission à moyenne portée (8),
- l'alignement étant à chaque fois nouvellement effectué, déclenché par chaque entrée (IN), notamment nouvelle, de nouvelles données de processus de travail (nAPD), notamment au moyen de l'un des dispositifs de sortie et d'entrée (3),
- l'entrée comprenant une confirmation des données de processus de travail délivrées en sortie et/ou des données de processus de travail différentes des données de processus de travail délivrées en sortie,
- l'alignement comprenant : comparaison automatique de données de processus de travail (iAPD) entrées au moyen de l'un des dispositifs de sortie et d'entrée (3) avec des données de processus de travail prédéfinies (voAPD) délivrées en sortie au moyen du dispositif de sortie et d'entrée (3) et, dans le cas d'un écart minimal (MA) entre les données de processus de travail prédéfinies (voAPD) et les données de processus de travail (iAPD) entrées entre elles, adaptation automatique des données de processus de travail prédéfinies (voAPD) à propos des étapes de travail (AS) pour les sections d'arbre (4) à traiter sur la base de l'écart minimal (MA) et/ou des données de processus de travail (iAPD) entrées à l'aide d'un critère d'optimisation (OK),
- le critère d'optimisation (OK) étant un critère d'optimisation de réduction de danger (SOK), un critère d'optimisation de distance (AOK) et/ou un critère d'optimisation de progression de travail de groupe (FOK), un critère d'optimisation de temps (ZOK) et/ou un critère d'optimisation de valeur (WOK),
- le système de communication forestier (1), lors de l'écart minimal (MA) et lors de l'adaptation à l'aide du critère d'optimisation de réduction de danger (SOK), étant configuré pour délivrer en sortie une information (Info) à propos de l'écart minimal (MA) et/ou l'adaptation et/ou les données de processus de travail adaptées (aAPD) et/ou le critère d'optimisation (OK) au moyen d'au moins l'un des dispositifs de sortie et d'entrée (3).
